# EUROPEAN PATENT SPECIFICATION

(11) **EP 4 212 846 B1**
(45) Date of publication and mention of the grant of the patent: **23.10.2024**
(21) Application number: 21866297.1
(22) Date of filing: 14.05.2021
(51) Int. Cl.: G01N 3/00, G06F 30/17, G06F 30/27, G06F 113/14, G06F 119/02, G06F 119/14, G06N 3/0985

(54) **STEEL PIPE COLLAPSE STRENGTH PREDICTION MODEL GENERATION METHOD, STEEL PIPE COLLAPSE STRENGTH PREDICTION METHOD, STEEL PIPE MANUFACTURING CHARACTERISTICS DETERMINATION METHOD, AND STEEL PIPE MANUFACTURING METHOD**
VERFAHREN ZUR ERZEUGUNG EINES STAHLROHREINBRUCHSFESTIGKEITSVORHERSAGEMODELLS, STAHLROHREINBRUCHSFESTIGKEITSVORHERSAGEVERFAHREN, STAHLROHRHERSTELLUNGSVERFAHREN UND STAHLROHRHERSTELLUNGSVERFAHREN
PROCÉDÉ DE GÉNÉRATION DE MODÈLE DE PRÉDICTION DE RÉSISTANCE À L'ÉCRASEMENT DE TUYAU EN ACIER, PROCÉDÉ DE PRÉDICTION DE RÉSISTANCE À L'ÉCRASEMENT DE TUYAU EN ACIER, PROCÉDÉ DE DÉTERMINATION DE CARACTÉRISTIQUES DE FABRICATION DE TUYAU EN ACIER ET PROCÉDÉ DE FABRICATION DE TUYAU EN ACIER

(30) Priority: 11.09.2020 JP 2020153332
(43) Date of publication of application: 19.07.2023
(73) Proprietor: JFE Steel Corporation, Tokyo 100-0011 (JP)
(72) Inventor: SAKIMOTO Takahiro, Tokyo 100-0011 (JP); HANDA Tsunehisa, Tokyo 100-0011 (JP)
(74) Representative: Hoffmann Eitle
(86) International application number: PCT/JP2021/018338
(87) International publication number: WO 2022/054336

(56) References cited:
- WO-A1-2018/074433
- WO-A1-2020/148917
- CN-A- 102 284 512
- JP-A- 2019 174 452
- US-A1- 2018 038 542
- DJERRAD ABDERRAHIM ET AL: "Artificial Neural Networks (ANN) Based Compressive Strength Prediction of AFRP Strengthened Steel Tube", INTERNATIONAL JOURNAL OF STEEL STRUCTURES, SPRINGER BERLIN HEIDELBERG, BERLIN/HEIDELBERG, vol. 20, no. 1, 9 September 2019 (2019-09-09), pages 156 - 174, XP037006504, ISSN: 1598-2351, [retrieved on 20190909], DOI: 10.1007/S13296-019-00276-6
- MOHAMADIAN NIMA ET AL: "A geomechanical approach to casing collapse prediction in oil and gas wells aided by machine learning", JOURNAL OF PETROLEUM SCIENCE AND ENGINEERING, ELSEVIER, AMSTERDAM, NL, vol. 196, 26 August 2020 (2020-08-26), XP086410796, ISSN: 0920-4105, [retrieved on 20200826], DOI: 10.1016/J.PETROL.2020.107811
- MIMAKI TOSHITARO, KAZUSHI MARUYAMA, RYUICHI INOWAKI: "Finite-element analysis and formula of collapse strength under bending load", TRANSACTIONS OF THE JAPAN SOCIETY OF MECHANICAL ENGINEERS, 1 January 1996 (1996-01-01), pages 212 - 218, XP055913346, Retrieved from the Internet <URL:https://www.jstage.jst.go.jp/article/kikaia1979/62/593/62_593_212/_pdf/-char/ja> [retrieved on 20220419], DOI: 10.1299/kikaia.62.212
- OKATSU MITSUHIRO, SHIKANAI NOBUO, KONDO JOE: "Development of a high-deformability linepipe with resistance to strain-aged hardening by HOP(R) (heat-treatment on-line process", JFE TECHNICAL REPORT, 1 October 2008 (2008-10-01), pages 8 - 14, XP055913348, Retrieved from the Internet <URL:https://www.jfe-steel.co.jp/en/research/report/012/pdf/012-03.pdf> [retrieved on 20220419]
- TSURU, EIJI : "Forming and collapse simulation of UOE pipe with strength anisotropy", ZAIRYO-TO-PUROSESU = CURRENT ADVANCES IN MATERIALS AND PROCESSES : CAMP-ISIJ; 149TH ISIJ SPRING MEETING (MARCH 29-31, 2005), vol. 18, no. 1, 30 November 2004 (2004-11-30) - 31 March 2005 (2005-03-31), JP , pages 356 - 359, XP009543540, ISSN: 0914-6628

## Description

### Technical Field

The present invention relates to a steel pipe manufacturing method.

### Background Art

Some steel pipes used in an environment where an external pressure is applied may cause collapse due to the external pressure. For example, in submarine pipelines, if a steel pipe (a line pipe) causes such collapse, the collapse leads to structure damage or destruction and significantly affects economics or the environment. The occurrence of collapse is the most dangerous when bending strain by construction is superimposed under no internal pressure during construction of submarine pipelines, and an estimation equation for predicting the collapse strength under external pressure bending in such a condition has been developed.

The estimation equation for predicting the collapse strength under external pressure bending is described, for example, in NPL 1. NPL 1 defines standards including DNV OS-F101 and has proposed an estimation equation for predicting the collapse strength under external pressure bending from data including the ovality of the outer circumferential shape of a steel pipe to be evaluated, the yield stress (stress at a strain of 0.5%) at the center of the wall thickness of a material or at 1/4 (from the inner face) of the wall thickness, the Young's modulus, the Poisson's ratio, and the bending strain during construction (D Chapter 400, Local Buckling -External over pressure only, Section 401, Formula (5.10)).

PL1 discloses a control method for a manufacturing process of a large deformation pipeline steel tube. The disclosure relates to the manufacturing field of ferrous material, and especially relates to a pipeline steel tube manufacturing process control method of a large deformation.

PL2 discloses metal pipes with an anticorrosive polyolefin covering layer comprising a corrosion protective layer of a chromate, phosphate or other salt, a polyolefin based adhesive and a polyethylene or polypropylene coating layer.

### Citation List

### Non Patent Literature

NPL 1: OFFSHORE STANDARD DNV-OS-F101, SUBMARINE PIPELINE SYSTEMS, DET NORSKE VERITAS, 2010, October, SEC 5, p 41-56

### Patent Literature

PL1: CN 102 284 512 A
PL2: US 2018/038542 A1

### Summary of Invention

### Technical Problem

The estimation equation for predicting the collapse strength under external pressure bending according to NPL 1, however, has the following problems.

In other words, steel pipes especially used in submarine pipelines are coated for anticorrosion. During the coating, a steel pipe may be heated, and compression characteristics of the coated steel pipe and eventually collapse characteristics of the coated steel pipe may change depending on the coating conditions. The collapse strength of a coated steel pipe also depends on not only the steel pipe shape after steel pipe forming and the strength characteristics (including the tensile strength, the compressive strength, the Young's modulus, and the Poisson's ratio) of a steel pipe after steel pipe forming but also the pipe-making strain during steel pipe forming (strain history during steel pipe forming). This is because the pipe-making strain during steel pipe forming greatly affects the steel pipe shape after steel pipe forming and the strength characteristics of a steel pipe after steel pipe forming and eventually greatly affects the collapse characteristics of a coated steel pipe.

NPL 1, however, does not consider the pipe-making strain during steel pipe forming and coating conditions and predicts the coated steel pipe collapse strength under external pressure bending with insufficient accuracy. The predicted coated steel pipe collapse strength under external pressure bending fails to match the actually measured coated steel pipe collapse strength under external pressure bending, and the difference between them is large. Such prediction may result in an excessively safe design when a steel pipe is designed or may lead to collapse at a lower external pressure than a predicted pressure to result in a serious accident.

The present invention is therefore intended to solve the related art problems and to provide a a steel pipe manufacturing method capable of highly accurately predicting the collapse strength under external pressure bending of a coated steel pipe coated after steel pipe forming in consideration of the pipe-making strain during steel pipe forming and coating conditions as well as the bending strain during construction.

### Solution to Problem

To solve the problem the invention is defined by the subject matter of the independent claim. A further preferred embodiment is defined in the dependent claim.

### Advantageous Effects of Invention

According to the steel pipe manufacturing method pertaining to the present invention, the collapse strength under external pressure bending of a coated steel pipe coated after steel pipe forming can be highly accurately predicted in consideration of the pipe-making strain during steel pipe forming and coating conditions as well as the bending strain during construction.

### Brief Description of Drawings

FIG. 1 is a functional block diagram of a schematic configuration of a steel pipe manufacturing characteristics determination apparatus to which a steel pipe collapse strength prediction model generation method, a steel pipe collapse strength prediction method, and a steel pipe manufacturing characteristics determination method;
FIG. 2 is a view illustrating a processing flow of a steel pipe collapse strength prediction model as a neural network model generated by the steel pipe collapse strength prediction model generation method; and
FIG. 3 is a flowchart for describing a processing flow of a steel pipe manufacturing characteristics arithmetic section in an arithmetic processing unit of a steel pipe manufacturing characteristics determination apparatus applied to an embodiment of the present invention.

### Description of Embodiments

Embodiments of the present invention will now be described with reference to drawings. The following embodiments are illustrative examples of apparatuses and methods for embodying the technical idea of the present invention, and the technical idea of the present invention is not limited to the following embodiments in terms of the materials, the shapes, the structures, the configurations, and the like of components. The drawings are schematic. Hence, it should be noted that the relations, ratios, and the like between thicknesses and plan dimensions may differ from those in reality, and the relations and ratios may differ among the drawings.

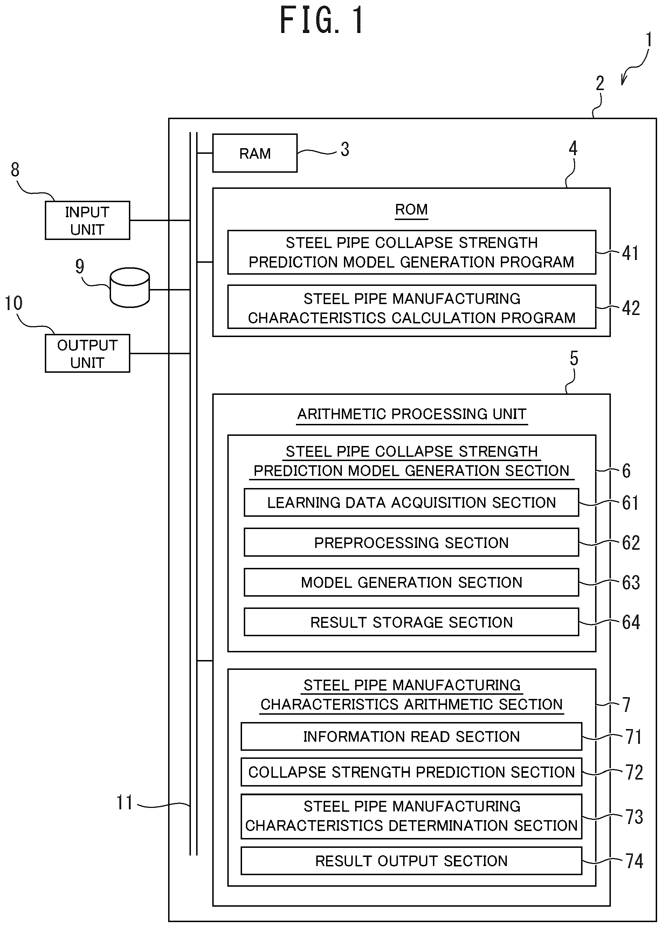

FIG. 1 illustrates a functional block diagram of a schematic configuration of a steel pipe manufacturing characteristics determination apparatus to which a steel pipe collapse strength prediction model generation method, a steel pipe collapse strength prediction method, and a steel pipe manufacturing characteristics determination method.

A steel pipe manufacturing characteristics determination apparatus 1 illustrated in FIG. 1 generates a steel pipe collapse strength prediction model of a coated steel pipe coated after steel pipe forming, predicts the collapse strength under external pressure bending of a coated steel pipe coated after steel pipe forming by using the generated steel pipe collapse strength prediction model, and determines steel pipe manufacturing characteristics such that the predicted coated steel pipe collapse strength under external pressure bending asymptotically approaches the requested collapse strength under external pressure bending of an intended coated steel pipe.

The steel pipe manufacturing characteristics determination apparatus 1 illustrated in FIG. 1 is a computer system including an arithmetic unit 2, an input unit 8, a storage unit 9, and an output unit 10. The arithmetic unit 2 includes a RAM 3, a ROM 4, and an arithmetic processing unit 5, as described later, and the RAM 3, the ROM 4, and the arithmetic processing unit 5 are connected to the input unit 8, the storage unit 9, and the output unit 10 through a bus 11. The connection manner of the arithmetic unit 2 to the input unit 8, the storage unit 9, and the output unit 10 is not limited to this and may be a wireless connection or may be a combination of wired and wireless connections.

The input unit 8 functions as an input port, such as a keyboard, a pen tablet, a touchpad, and a mouse, to which various information is input by an operator of the system. Into the input unit 8, for example, a steel pipe collapse strength prediction model generation command, a steel pipe manufacturing characteristics arithmetic command, steel pipe manufacturing characteristics including the steel pipe shape of a coated steel pipe the collapse strength of which under external pressure bending is to be predicted, after steel pipe forming, steel pipe strength characteristics after steel pipe forming, the pipe-making strain during steel pipe forming, coating conditions, and the bending strain during construction, the collapse strength under external pressure bending of an intended coated steel pipe, and steel pipe manufacturing characteristics determination mode information are input.

In the description, a steel pipe is typically manufactured by bending and forming a plate-like steel sheet into a tubular shape, and then the surface is coated to give a coated steel pipe.

Of the steel pipe manufacturing characteristics input into the input unit 8, the steel pipe shape after steel pipe forming means the shape of a steel pipe after a steel sheet is formed into a tubular shape. The steel pipe shape after steel pipe forming specifically includes the maximum outer diameter Dmax (mm) of a steel pipe, the minimum outer diameter Dmin (mm) of a steel pipe, the average outer diameter Dave (mm) of a steel pipe, the average wall thickness t (mm) of a steel pipe, and the roundness (ovality) fO (%) of the outer circumferential shape of a steel pipe. As the steel pipe shape after steel pipe forming, actually measured values are input into the input unit 8. The steel pipe shape after steel pipe forming greatly affects the collapse strength under external pressure bending of a coated steel pipe to be predicted and thus is input.

The collapse strength under external pressure bending of a coated steel pipe means the applied stress (MPa) at which the coated steel pipe causes collapse, and the "collapse" in the description means a condition in which the applied stress reaches a maximum value, and a coated steel pipe is deformed to such an extent as not to maintain the shape against the external pressure.

The steel pipe strength characteristics after steel pipe forming mean strength characteristics of a steel pipe after a steel sheet is formed into a tubular shape. The steel pipe strength characteristics after steel pipe forming in the present description are specifically the Young's modulus E (GPa) of a steel pipe, the Poisson's ratio µ (-) of a steel pipe, the tensile strength YS (MPa) of a steel pipe, the compressive strength 0.23% YS (stress at a strain of 0.23%) of a steel pipe, and the compressive strength 0.5% YS (stress at a strain of 0.5%) of a steel pipe. The steel pipe strength characteristics after steel pipe forming greatly affect the collapse strength under external pressure bending of a coated steel pipe to be predicted and thus are input. As the steel pipe strength characteristics after steel pipe forming, values simulated from strength characteristics of a steel sheet before steel pipe forming by finite element analysis or actually measured values are input.

The pipe-making strain during steel pipe forming is a tensile strain (%) or a compression strain (%) during steel pipe forming. The pipe-making strain during steel pipe forming greatly affects the steel pipe shape after steel pipe forming and the steel pipe strength characteristics after steel pipe forming to greatly affects the collapse strength under external pressure bending of a coated steel pipe to be predicted and thus is input. As the pipe-making strain during steel pipe forming, a value forming-simulated from strength characteristics of a steel sheet before steel pipe forming by finite element analysis or an actually measured value is input.

The coating conditions in the description are the maximum temperature (°C) and the holding time (min) during coating. As the coating conditions, actually measured values are input.

Coating a formed steel pipe is for anticorrosion. In particular, steel pipes used in a submarine pipeline require excellent corrosion resistance and thus are typically coated after forming. The coating conditions (maximum temperature (°C) and holding time (min)) during coating affect the steel pipe strength characteristics after steel pipe forming to directly affect the anti-collapse performance of a coated steel pipe and thus are input into the input unit 8. The effect of coating heat changes the quality of the material of a steel pipe (dislocation deposition, recovery, strain aging, and the like), and this increases or decreases the collapse strength of a steel pipe after steel pipe forming (anti-collapse performance before coating).

The bending strain during construction is the tensile strain (%) or the compression strain (%) when a coated steel pipe is constructed, for example, on the sea bottom. The occurrence of collapse is the most dangerous when bending strain by construction is superimposed under no internal pressure during construction of submarine pipelines.

The storage unit 9, for example, includes a hard disk drive, a semiconductor drive, or an optical drive and is a device to store information needed in the system (information needed to achieve the functions of the steel pipe collapse strength prediction model generation section 6 and the steel pipe manufacturing characteristics arithmetic section 7 described later). Examples of the information needed to achieve the function by the steel pipe collapse strength prediction model generation section 6 include a plurality of learning data that includes, as input data, previous steel pipe manufacturing characteristics including the steel pipe shape after steel pipe forming, steel pipe strength characteristics after steel pipe forming, the pipe-making strain during steel pipe forming, coating conditions, and the bending strain during construction and, as an output datum for the input data, the previous collapse strength of the coated steel pipe coated after steel pipe forming.

Examples of the information needed to achieve the function by the steel pipe manufacturing characteristics arithmetic section 7 include a steel pipe collapse strength prediction model generated by the steel pipe collapse strength prediction model generation section 6. Examples of the information needed to achieve the function include steel pipe manufacturing characteristics that are input into the input unit 8 to be input into a steel pipe collapse strength prediction model and include the steel pipe shape of a coated steel pipe the collapse strength under pressure bending of which is to be predicted, after steel pipe forming, steel pipe strength characteristics after steel pipe forming, the pipe-making strain during steel pipe forming, coating conditions, and the bending strain during construction, and the collapse strength under pressure bending of an intended coated steel pipe coated after steel pipe forming. Examples of the information needed to achieve the function further include steel pipe manufacturing characteristics determination mode information (information whether a mode is for determining the optimum steel pipe manufacturing characteristics).

The output unit 10 functions as an output port to output output data from the arithmetic unit 2, such as information of the collapse strength under pressure bending (predictive value) of a coated steel pipe coated after steel pipe forming, predicted by a collapse strength prediction section 72 and information of steel pipe manufacturing characteristics determined by a steel pipe manufacturing characteristics determination section 73. The output unit 10 includes any display such as a liquid crystal display and an organic display and thus can display a screen page based on output data.

Next, the arithmetic unit 2 includes a RAM 3, a ROM 4, and an arithmetic processing unit 5 as illustrated in FIG. 1. The ROM 4 stores a steel pipe collapse strength prediction model generation program 41 and a steel pipe manufacturing characteristics calculation program 42. The arithmetic processing unit 5 has an arithmetic processing function and is connected to the RAM 3 and the ROM 4 through a bus 11. The RAM 3, the ROM 4, and the arithmetic processing unit 5 are connected through the bus 11 to the input unit 8, the storage unit 9, and the output unit 10.

The arithmetic processing unit 5 includes, as functional blocks, a steel pipe collapse strength prediction model generation section 6 and a steel pipe manufacturing characteristics arithmetic section 7.

The steel pipe collapse strength prediction model generation section 6 of the arithmetic processing unit 5 performs machine learning of a plurality of learning data that are stored in the storage unit 9 and include, as input data, previous steel pipe manufacturing characteristics including the steel pipe shape after steel pipe forming, steel pipe strength characteristics after steel pipe forming, the pipe-making strain during steel pipe forming, coating conditions, and the bending strain during construction and, as an output datum for the input data, the previous collapse strength under external pressure bending of the coated steel pipe coated after steel pipe forming, to generate a steel pipe collapse strength prediction model. The machine learning method in the embodiment is a neural network, and the steel pipe collapse strength prediction model is a prediction model constructed by the neural network.

In the embodiment, the steel pipe collapse strength prediction model generation section 6 includes, as functional blocks, a learning data acquisition section 61, a preprocessing section 62, a model generation section 63, and a result storage section 64. On receiving a steel pipe collapse strength prediction model generation command by inputting the steel pipe collapse strength prediction model generation command into the input unit 8, the steel pipe collapse strength prediction model generation section 6 executes the steel pipe collapse strength prediction model generation program 41 stored in the ROM 4 and executes each function of the learning data acquisition section 61, the preprocessing section 62, the model generation section 63, and the result storage section 64. After every execution of the functions by the steel pipe collapse strength prediction model generation section 6, the steel pipe collapse strength prediction model is updated.

The execution of each function of the learning data acquisition section 61, the preprocessing section 62, the model generation section 63, and the result storage section 64 by the steel pipe collapse strength prediction model generation section 6 corresponds to the steel pipe collapse strength prediction model generation method. The steel pipe collapse strength prediction model generation method performs machine learning of a plurality of learning data that include, as input data, previous steel pipe manufacturing characteristics including the steel pipe shape after steel pipe forming, steel pipe strength characteristics after steel pipe forming, the pipe-making strain during steel pipe forming, coating conditions, and the bending strain during construction and, as an output datum for the input data, the previous collapse strength under pressure bending of the coated steel pipe coated after steel pipe forming, to generate a steel pipe collapse strength prediction model that predicts the collapse strength under pressure bending of a coated steel pipe coated after steel pipe forming.

In the embodiment, the learning data acquisition section 61 acquires a plurality of learning data that are stored in the storage unit 9 and include, as input data, previous steel pipe manufacturing characteristics including the steel pipe shape after steel pipe forming, steel pipe strength characteristics after steel pipe forming, the pipe-making strain during steel pipe forming, coating conditions, and the bending strain during construction and, as an output datum for the input data, the previous collapse strength of the coated steel pipe coated after steel pipe forming. Each learning datum is a set of input data and an output datum.

The preprocessing section 62 processes the plurality of learning data acquired by the learning data acquisition section 61 into data for generating a steel pipe collapse strength prediction model. Specifically, the preprocessing section 62 standardizes (normalizes) actual information of previous steel pipe manufacturing characteristics including the steel pipe shape after steel pipe forming, steel pipe strength characteristics after steel pipe forming, the pipe-making strain during steel pipe forming, coating conditions, and the bending strain during construction and actual information of the previous collapse strength under external pressure bending of the coated steel pipe coated after steel pipe forming included in the learning data, between 0 and 1 so as to be read by a neural network model.

The model generation section 63 generates a steel pipe collapse strength prediction model that performs machine learning of the plurality of learning data that have been preprocessed by the preprocessing section 62 and includes, as input data, previous steel pipe manufacturing characteristics including the steel pipe shape after steel pipe forming, steel pipe strength characteristics after steel pipe forming, the pipe-making strain during steel pipe forming, coating conditions, and the bending strain during construction and, as an output datum, the previous collapse strength under external pressure bending of the coated steel pipe coated after steel pipe forming. In the present embodiment, a neural network is adopted as the machine learning method, and thus a neural network model is generated as the steel pipe collapse strength prediction model. In other words, the model generation section 63 creates a neural network model as the steel pipe collapse strength prediction model that links the actual input data in learning data processed for generating a steel pipe collapse strength prediction model (actual data of previous steel pipe manufacturing characteristics) to the actual output data (actual data of the previous collapse strength under external pressure bending of the coated steel pipe after steel pipe forming) . The neural network model is expressed, for example, by a function formula.

Specifically, the model generation section 63 sets hyperparameters used in the neural network model and performs learning by the neural network model using the hyperparameters. As the hyperparameters, typically, the number of hidden layers, the number of neurons in each hidden layer, the dropout rate in each hidden layer, and the activation function in each hidden layer are set, but the hyperparameters are not limited to them.

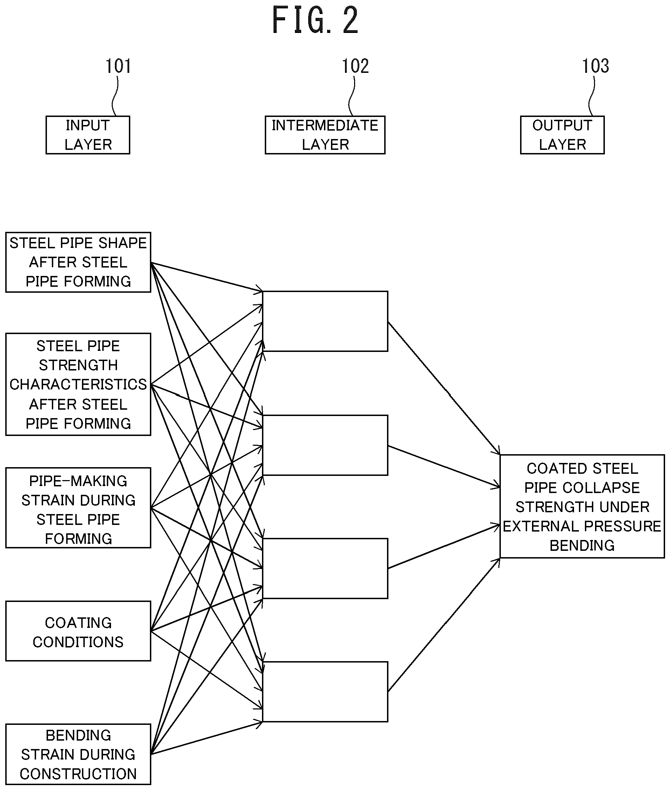

FIG. 2 illustrates a processing flow of a steel pipe collapse strength prediction model as a neural network model generated by the steel pipe collapse strength prediction model generation method.

The steel pipe collapse strength prediction model as a neural network model includes an input layer 101, an intermediate layer 102, and an output layer 103 sequentially from the input side.

When the model generation section 63 performs learning by a neural network model using hyperparameters, the input layer 101 stores the actual information of previous steel pipe manufacturing characteristics including the steel pipe shape after steel pipe forming, steel pipe strength characteristics after steel pipe forming, the pipe-making strain during steel pipe forming, coating conditions, and the bending strain during construction included in the learning data processed by the preprocessing section 62, or the actual information of previous steel pipe manufacturing characteristics normalized between 0 and 1.

The intermediate layer 102 includes a plurality of hidden layers, and a plurality of neurons are placed in each hidden layer.

The output layer 103 unites neuron information transmitted by the intermediate layer 102 and finally outputs the united information as the collapse strength under pressure bending of a coated steel pipe coated after steel pipe forming. On the basis of the output result and the read actual value of the previous coated steel pipe collapse strength under pressure bending, the weight coefficient in the neural network model is gradually optimized, and learning is performed.

The result storage section 64 allows the storage unit 9 to store learning data, a parameter (weight coefficient) of the neural network model, and the output result from the neural network model for the learning data.

The steel pipe manufacturing characteristics arithmetic section 7 in the arithmetic processing unit 5 inputs, into a steel pipe collapse strength prediction model generated in the steel pipe collapse strength prediction model generation section 6, steel pipe manufacturing characteristics including the steel pipe shape of a coated steel pipe to be predicted after steel pipe forming, steel pipe strength characteristics after steel pipe forming, the pipe-making strain during steel pipe forming, coating conditions, and the bending strain during construction, to predict the collapse strength under external pressure bending of the coated steel pipe coated after steel pipe forming. When steel pipe manufacturing characteristics determination mode information is the steel pipe manufacturing characteristics determination mode, the steel pipe manufacturing characteristics arithmetic section 7 sequentially changes at least one of the steel pipe shape after steel pipe forming, the steel pipe strength characteristics after steel pipe forming, the pipe-making strain during steel pipe forming, the coating conditions, and the bending strain during construction included in steel pipe manufacturing characteristics such that the predicted coated steel pipe collapse strength under pressure bending asymptotically approaches the requested collapse strength under pressure bending of an intended coated steel pipe, to determine the steel pipe manufacturing characteristics.

For the processing, the steel pipe manufacturing characteristics arithmetic section 7 includes, as functional blocks, an information read section 71, a collapse strength prediction section 72, a steel pipe manufacturing characteristics determination section 73, and a result output section 74 as illustrated in FIG. 1.

The information read section 71 reads a steel pipe collapse strength prediction model generated by the steel pipe collapse strength prediction model generation section 6, the information of steel pipe manufacturing characteristics including the steel pipe shape of a coated steel pipe after steel pipe forming the collapse strength of which is to be predicted, steel pipe strength characteristics after steel pipe forming, the pipe-making strain during steel pipe forming, coating conditions, and the bending strain during construction, which are to be input into a steel pipe collapse strength prediction model, the information of the collapse strength under pressure bending of an intended coated steel pipe, and steel pipe manufacturing characteristics determination mode information.

The collapse strength prediction section 72 inputs steel pipe manufacturing characteristics including the steel pipe shape of a coated steel pipe after steel pipe forming the collapse strength of which is to be predicted, steel pipe strength characteristics after steel pipe forming, the pipe-making strain during steel pipe forming, coating conditions, and the bending strain during construction, which have been read by the information read section 71, into a steel pipe collapse strength prediction model read by the information read section 71 to predict the collapse strength under pressure bending of a coated steel pipe coated after steel pipe forming.

When steel pipe manufacturing characteristics determination mode information read by the information read section 71 is the steel pipe manufacturing characteristics determination mode, the steel pipe manufacturing characteristics determination section 73 and the collapse strength prediction section 72 sequentially change at least one of the steel pipe shape after steel pipe forming, the steel pipe strength characteristics after steel pipe forming, the pipe-making strain during steel pipe forming, the coating conditions, and the bending strain during construction included in steel pipe manufacturing characteristics such that the predicted coated steel pipe collapse strength under pressure bending asymptotically approaches the requested collapse strength under pressure bending of an intended coated steel pipe, to determine steel pipe manufacturing characteristics, and output the information of the determined steel pipe manufacturing characteristics to the result output section 74. When steel pipe manufacturing characteristics determination mode information read by the information read section 71 is not the steel pipe manufacturing characteristics determination mode, the steel pipe manufacturing characteristics determination section 73 outputs the information (predictive value) of the coated steel pipe collapse strength under pressure bending predicted by the collapse strength prediction section 72 to the result output section 74.

The result output section 74 outputs the information of the determined steel pipe manufacturing characteristics or the information (predictive value) of the predicted collapse strength of a coated steel pipe to the output unit 10 and allows the storage unit 9 to store the information.

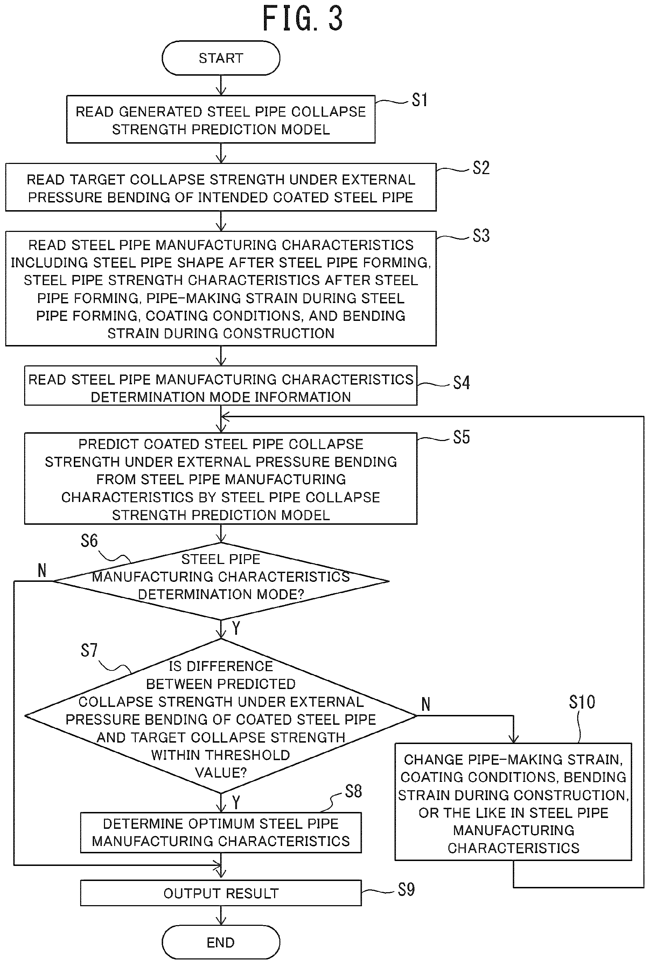

Next, the processing flow of the steel pipe manufacturing characteristics arithmetic section 7 of the arithmetic processing unit 5 in the steel pipe manufacturing characteristics determination apparatus 1 will be described with reference to FIG. 3.

On receiving a steel pipe manufacturing characteristics arithmetic command by inputting the steel pipe manufacturing characteristics arithmetic command into the input unit 8, the steel pipe manufacturing characteristics arithmetic section 7 executes the steel pipe manufacturing characteristics calculation program 42 stored in the ROM 4 and executes each function of the information read section 71, the collapse strength prediction section 72, the steel pipe manufacturing characteristics determination section 73, and the result output section 74.

First, the information read section 71 of the steel pipe manufacturing characteristics arithmetic section 7 reads, in step S1, a steel pipe collapse strength prediction model generated by the steel pipe collapse strength prediction model generation section 6 and stored in the storage unit 9.

Next, the information read section 71 reads, in step S2, the information of a requested collapse strength under external pressure bending of an intended coated steel pipe coated after steel pipe forming input from a host computer (not illustrated) and stored in the storage unit 9.

Next, the information read section 71 reads, in step S3, the information of steel pipe manufacturing characteristics including the steel pipe shape of a coated steel pipe to be predicted after steel pipe forming, steel pipe strength characteristics after steel pipe forming, the pipe-making strain during steel pipe forming, coating conditions, and the bending strain during construction, which has been input into the input unit 8 by an operator and is input into the steel pipe collapse strength prediction model stored in the storage unit 9.

Next, the information read section 71 reads, in step S4, steel pipe manufacturing characteristics determination mode information (information whether the mode is for determining steel pipe manufacturing characteristics) input into the input unit 8 by an operator and stored in the storage unit 9.

The collapse strength prediction section 72 then inputs, in step S5, the steel pipe manufacturing characteristics read in step S3 and including the steel pipe shape of a coated steel pipe to be predicted after steel pipe forming, steel pipe strength characteristics after steel pipe forming, the pipe-making strain during steel pipe forming, coating conditions, and the bending strain during construction, into the steel pipe collapse strength prediction model read in step S1, to predict the coated steel pipe collapse strength under pressure bending.

Step S1 to step S5 correspond to the steel pipe collapse strength prediction method, in which steel pipe manufacturing characteristics including the steel pipe shape of a coated steel pipe to be predicted after steel pipe forming, steel pipe strength characteristics after steel pipe forming, the pipe-making strain during steel pipe forming, coating conditions, and the bending strain during construction are input into a steel pipe collapse strength prediction model generated by the steel pipe collapse strength prediction model generation method to predict the coated steel pipe collapse strength under pressure bending.

Subsequently, the steel pipe manufacturing characteristics determination section 73 determines, in step S6, whether the steel pipe manufacturing characteristics determination mode information read in step S4 (information whether the mode is for determining the steel pipe manufacturing characteristics) is the steel pipe manufacturing characteristics determination mode (mode for determining steel pipe manufacturing characteristics).

When the determination result in step S6 is YES (is the steel pipe manufacturing characteristics determination mode), the processing goes to step S7, and when the determination result in step S6 is NO (is not the steel pipe manufacturing characteristics determination mode), the processing goes to step S9.

In step S7, the steel pipe manufacturing characteristics determination section 73 determines whether the difference between the coated steel pipe collapse strength under pressure bending predicted in step S5 (predictive value) and the requested collapse strength under pressure bending of an intended coated steel pipe read in step S2 (target value) is within a predetermined threshold value.

In the embodiment, the above predetermined threshold value is typically set at 0.5% to 1%.

When the determination result in step S7 is YES (when the difference between a predictive value and a target value is determined to be within a predetermined threshold value), the processing goes to step S8, and when the determination result in step S7 is NO (when the difference between a predictive value and a target value is determined to be larger than a predetermined threshold value), the processing goes to step S10.

In step S10, the steel pipe manufacturing characteristics determination section 73 changes at least one of the steel pipe shape after steel pipe forming, the steel pipe strength characteristics after steel pipe forming, the pipe-making strain during steel pipe forming, the coating conditions, and the bending strain during construction included in steel pipe manufacturing characteristics of a coated steel pipe the collapse strength of which is to be predicted, which have been read in step S3, and the processing is returned to step S5.

When the processing is returned to step S5, the collapse strength prediction section 72 inputs steel pipe manufacturing characteristics in which at least one of the steel pipe shape after steel pipe forming, the steel pipe strength characteristics after steel pipe forming, the pipe-making strain during steel pipe forming, the coating conditions, and the bending strain during construction has been changed in step S10, into the steel pipe collapse strength prediction model read in step S1 to re-predict the coated steel pipe collapse strength under pressure bending. Through step S6, the steel pipe manufacturing characteristics determination section 73 determines, in step S7, whether the difference between the coated steel pipe collapse strength under pressure bending re-predicted in step S5 (predictive value) and the requested collapse strength under pressure bending of an intended coated steel pipe read in step S2 (target value) is within a predetermined threshold value. A series of step S10, step S5, step S6, and step S7 is repeatedly executed until the determination result becomes YES.

When the determination result in step S7 is YES (when the difference between a predictive value and a target value is determined to be within a predetermined threshold value), the processing goes to step S8. In step S8, the steel pipe manufacturing characteristics determination section 73 determines the steel pipe manufacturing characteristics including the steel pipe shape after steel pipe forming, the steel pipe strength characteristics after steel pipe forming, the pipe-making strain during steel pipe forming, the coating conditions, and the bending strain during construction when the difference between a predictive value and a target value is determined to be within a predetermined threshold value, to be steel pipe manufacturing characteristics.

Step S6, step S7, step S10, step S5, step S6, step S7, and step S8 correspond to the steel pipe manufacturing characteristics determination method.
The steel pipe manufacturing characteristics determination method sequentially changes at least one of the steel pipe shape after steel pipe forming, the steel pipe strength characteristics after steel pipe forming, the pipe-making strain during steel pipe forming, the coating conditions, and the bending strain during construction included in steel pipe manufacturing characteristics such that the predicted collapse strength under pressure bending of a coated steel pipe coated after steel pipe forming asymptotically approaches the requested collapse strength under pressure bending of an intended coated steel pipe, to determine steel pipe manufacturing characteristics.

When the determination result in step S6 is YES (is a steel pipe manufacturing characteristics determination mode), in step S9, the result output section 74 of the steel pipe manufacturing characteristics arithmetic section 7 outputs the information of the steel pipe manufacturing characteristics determined in step S8 to the output unit 10. When the determination result in step S6 is NO (is not the steel pipe manufacturing characteristics determination mode), the result output section 74 outputs the information (predictive value) of the collapse strength under pressure bending of a coated steel pipe coated after steel pipe forming, predicted in step S5 to the output unit 10.

The processing of the steel pipe manufacturing characteristics arithmetic section 7 is thus completed.

As described above, the steel pipe collapse strength prediction model generation method performs machine learning of a plurality of learning data that includes, as input data, previous steel pipe manufacturing characteristics including the steel pipe shape after steel pipe forming, steel pipe strength characteristics after steel pipe forming, the pipe-making strain during steel pipe forming, coating conditions, and the bending strain during construction and, as an output datum for the input data, the previous collapse strength under external pressure bending of the coated steel pipe coated after steel pipe forming, to generate a steel pipe collapse strength prediction model that predicts a collapse strength under external pressure bending of a coated steel pipe coated after steel pipe forming (steel pipe collapse strength prediction model generation section 6).

This enables appropriate generation of a steel pipe collapse strength prediction model for highly accurately predicting the collapse strength under external pressure bending of a coated steel pipe coated after steel pipe forming in consideration of the pipe-making strain during steel pipe forming and coating conditions as well as the bending strain during construction.

Coating conditions that greatly affect the coated steel pipe collapse strength under external pressure bending are also considered to generate a steel pipe collapse strength prediction model that predicts the coated steel pipe collapse strength under external pressure bending, and thus the steel pipe collapse strength prediction model can have higher accuracy.

The bending strain during construction that greatly affects the coated steel pipe collapse strength under external pressure bending is considered to generate a steel pipe collapse strength prediction model that predicts the coated steel pipe collapse strength under external pressure bending, and thus the steel pipe collapse strength prediction model can have higher accuracy.

In the steel pipe collapse strength prediction method, steel pipe manufacturing characteristics including the steel pipe shape of a coated steel pipe to be predicted after steel pipe forming, steel pipe strength characteristics after steel pipe forming, the pipe-making strain during steel pipe forming, coating conditions, and the bending strain during construction are input into a steel pipe collapse strength prediction model generated by the steel pipe collapse strength prediction model generation method, to predict the collapse strength under external pressure bending of the coated steel pipe coated after steel pipe forming (step S1 to step S5) .

This enables accurate prediction of the collapse strength under external pressure bending of a coated steel pipe coated after steel pipe forming in consideration of the pipe-making strain during steel pipe forming and coating conditions as well as the bending strain during construction.

The steel pipe manufacturing characteristics determination method sequentially changes at least one of the steel pipe shape after steel pipe forming, the steel pipe strength characteristics after steel pipe forming, the pipe-making strain during steel pipe forming, the coating conditions, and the bending strain during construction included in steel pipe manufacturing characteristics such that the predicted coated steel pipe collapse strength under external pressure bending asymptotically approaches the requested collapse strength under external pressure bending of an intended coated steel pipe, to determine steel pipe manufacturing characteristics (step S6, step S7, step S10, step S5, step S6, step S7, and step S8).

This enables determination of steel pipe manufacturing characteristics including the steel pipe shape after steel pipe forming, steel pipe strength characteristics after steel pipe forming, the pipe-making strain during steel pipe forming, coating conditions, and the bending strain during construction when the predicted coated steel pipe collapse strength under external pressure bending asymptotically approaches the requested collapse strength under external pressure bending of an intended coated steel pipe.

To manufacture a coated steel pipe, the information (predictive value) of the coated steel pipe collapse strength under pressure bending predicted in step S5 and output from the output unit 10 can be assigned to the coated steel pipe formed in the forming step.

In other words, the steel pipe manufacturing method pertaining to an embodiment of the present invention may include a coated steel pipe forming step of forming a steel pipe and coating the formed steel pipe to form a coated steel pipe, a collapse strength prediction step of predicting the collapse strength under pressure bending of the coated steel pipe formed in the coated steel pipe forming step, by the steel pipe collapse strength prediction method (step S1 to step S5), and a performance predictive value assignment step of assigning the coated steel pipe collapse strength under pressure bending predicted in the collapse strength prediction step to the coated steel pipe formed in the coated steel pipe forming step.

In the embodiment, the assigning the predicted coated steel pipe collapse strength under pressure bending to the coated steel pipe in the performance predictive value assignment step is achieved, for example, by marking the coated steel pipe with the predicted coated steel pipe collapse strength under pressure bending (predictive value) or by attaching a label with the predicted coated steel pipe collapse strength under pressure bending (predictive value) to the coated steel pipe.

This allows a person handling a coated steel pipe to identify the collapse strength under pressure bending (predictive value) of the coated steel pipe.

To manufacture a coated steel pipe, coated steel pipe manufacturing conditions (selection of the pipe-making method, the flexural modulus at the time of pipe-making, the strain at the time of pipe-making, the temperature increase rate during coating, the maximum temperature during coating, the maximum temperature holding time during coating, the cooling rate during coating after the maximum temperature holding time, and the like) may be determined on the basis of the information of the optimum steel pipe manufacturing characteristics determined in step S8 and output from the output unit 10, and a coated steel pipe may be manufactured under the determined coated steel pipe manufacturing conditions.

In other words, in the steel pipe manufacturing method pertaining to an embodiment of the present invention, coated steel pipe manufacturing conditions may be determined on the basis of the optimum steel pipe manufacturing characteristics determined by the coated steel pipe manufacturing characteristics determination method (step S6, step S7, step S10, step S5, step S6, step S7, and step S8), and a coated steel pipe may be manufactured under the determined coated steel pipe manufacturing conditions.

The manufactured coated steel pipe satisfies the determined optimum steel pipe manufacturing characteristics. As a result, the predicted coated steel pipe collapse strength under pressure bending (predictive value) asymptotically approaches the requested collapse strength under pressure bending of an intended coated steel pipe, and the manufactured coated steel pipe has excellent anti-collapse performance and can prevent structure damage or destruction.

The embodiments of the present invention have been described, but the present invention is not limited to them, and various modifications and improvements can be made.

For example, when a steel pipe collapse strength prediction model is generated in the steel pipe collapse strength prediction model generation method, the previous steel pipe manufacturing characteristics as the input data at least includes the previous steel pipe shape after steel pipe forming, steel pipe strength characteristics after steel pipe forming, the pipe-making strain during steel pipe forming, coating conditions, and the bending strain during construction, and may further include other previous steel pipe manufacturing characteristics such as previous strength characteristics of a steel sheet before steel pipe forming.

When a steel pipe collapse strength prediction model is generated in the steel pipe collapse strength prediction model generation method, the previous steel pipe shape after steel pipe forming as the input datum is not limited to the maximum outer diameter Dmax (mm) of a steel pipe, the minimum outer diameter Dmin (mm) of a steel pipe, the average outer diameter Dave (mm) of a steel pipe, the average wall thickness t (mm) of a steel pipe, and the roundness (ovality) fO (%) of the outer circumferential shape of a steel pipe.

When a steel pipe collapse strength prediction model is generated in the steel pipe collapse strength prediction model generation method, the steel pipe strength characteristics after steel pipe forming as the input data are not limited to the Young's modulus E (GPa) of a steel pipe, the Poisson's ratio µ (-) of a steel pipe, the tensile strength YS (MPa) of a steel pipe, the compressive strength 0.23% YS (stress at a strain of 0.23%) of a steel pipe, and the compressive strength 0.5% YS (stress at a strain of 0.5%) of a steel pipe.

In the steel pipe collapse strength prediction method, the steel pipe shape of a coated steel pipe to be predicted after steel pipe forming, steel pipe strength characteristics after steel pipe forming, the pipe-making strain during steel pipe forming, coating conditions, and the bending strain during construction are input into a steel pipe collapse strength prediction model. The steel pipe manufacturing characteristics, however, at least include the steel pipe shape after steel pipe forming, steel pipe strength characteristics after steel pipe forming, the pipe-making strain during steel pipe forming, coating conditions, and the bending strain during construction, and other steel pipe manufacturing characteristics such as strength characteristics of a steel sheet before steel pipe forming may be input.

In the steel pipe collapse strength prediction method, the steel pipe shape after steel pipe forming to be input into a steel pipe collapse strength prediction model is not limited to the maximum outer diameter Dmax (mm) of a steel pipe, the minimum outer diameter Dmin (mm) of a steel pipe, the average outer diameter Dave (mm) of a steel pipe, the average wall thickness t (mm) of a steel pipe, and the roundness (ovality) fO (%) of the outer circumferential shape of a steel pipe.

In the steel pipe collapse strength prediction method, the steel pipe strength characteristics after steel pipe forming to be input into a steel pipe collapse strength prediction model are not limited to the Young's modulus E (GPa) of a steel pipe, the Poisson's ratio µ (-) of a steel pipe, the tensile strength YS (MPa) of a steel pipe, the compressive strength 0.23% YS (stress at a strain of 0.23%) of a steel pipe, and the compressive strength 0.5% YS (stress at a strain of 0.5%) of a steel pipe.

The machine learning method is a neural network, but the learning is not limited to that by a neural network, and decision tree learning, logistic regression, K-approximation, support vector machine regression, Q-learning, SARSA, and other supervised and unsupervised learning methods, reinforcement learning, and the like are applicable.

### Examples

To examine the effect of the invention, coated steel pipe collapse strengths under pressure bending were predicted under the conditions illustrated in Table 2.

**[Table 1]**

| | No | Steel pipe characteristics | | | | | Steel pipe shape | | | | | Pipe-making strain | Coating conditions | | Construction conditions | Experimental result | | |
|---|---|---|---|---|---|---|---|---|---|---|---|---|---|---|---|---|---|---|
| | | Young's modulus (GPa) | Poisson's ratio (-) | Tensile strength YS (Mpa) | Compressive strength 023%YS (Mpa) | Compressive strength 0.5%YS (Mpa) | Average thickness, t (mm) | Average outer diameter, Dave (mm) | Minimum outer diameter, Dmin (mm) | Maximum outer diameter, Dmax (mm) | Ovality, fO (%) | Tensile strain (%) | Maximum temperature (°C) | Holding time (min) | Bending strain (%) | Predetermined standard value (Mpa) | Actual pipe test result (Mpa) | Evaluation |
| Sample | 1 | 206 | 0.3 | 492 | 400 | 486 | 392 | 809.0 | 808.3 | 809.9 | 0.20 | 0.60 | 230 | 3 | 0.25 | 330 | 40.5 | A |
| Sample | 2 | 206 | 0.3 | 550 | 420 | 546 | 39.1 | 808.6 | 807.6 | 809.4 | 0.22 | 0.60 | 230 | 3 | 0.4 | 320 | 36.6 | B |

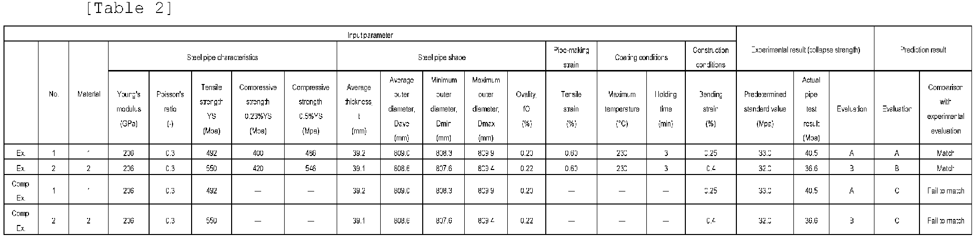

In Examples 1 and 2, a steel pipe collapse strength prediction model was generated by machine learning of the following plurality of learning data. The learning data included, as the input data, the previous steel pipe shape after steel pipe forming (the maximum outer diameter Dmax (mm) of a steel pipe, the minimum outer diameter Dmin (mm) of a steel pipe, the average outer diameter Dave (mm) of a steel pipe, the average wall thickness t (mm) of a steel pipe, and the roundness (ovality) fO (%) of the outer circumferential shape of a steel pipe), previous steel pipe strength characteristics after steel pipe forming (the Young's modulus E (GPa) of a steel pipe, the Poisson's ratio µ (-) of a steel pipe, the tensile strength YS (MPa) of a steel pipe, the compressive strength 0.23% YS (stress at a strain of 0.23%) of a steel pipe, and the compressive strength 0.5% YS (stress at a strain of 0.5%) of a steel pipe), the pipe-making strain during steel pipe forming (the tensile strain (%) during steel pipe forming), coating conditions (maximum temperature (°C) and holding time (min)), and the bending strain (%) during construction and, as an output datum for the input data, the previous collapse strength (MPa) under external pressure bending of a coated steel pipe coated after steel pipe forming.

In Example 1, the steel pipe shape of a sample 1 after steel pipe forming (the maximum outer diameter Dmax (mm) of the steel pipe, the minimum outer diameter Dmin (mm) of the steel pipe, the average outer diameter Dave (mm) of the steel pipe, the average wall thickness t (mm) of the steel pipe, and the roundness (ovality) fO (%) of the outer circumferential shape of the steel pipe), steel pipe strength characteristics after steel pipe forming (the Young's modulus E (GPa) of the steel pipe, the Poisson's ratio µ (-) of the steel pipe, the tensile strength YS (MPa) of the steel pipe, the compressive strength 0.23% YS (stress at a strain of 0.23%) of the steel pipe, and the compressive strength 0.5% YS (stress at a strain of 0.5%) of the steel pipe), the pipe-making strain during steel pipe forming (the tensile strain (%) during steel pipe forming), coating conditions (the maximum temperature (°C) and the holding time (min)), and the bending strain (%) during construction illustrated in Table 1 were input into the generated steel pipe collapse strength prediction model to predict the collapse strength under external pressure bending after steel pipe forming.

In Example 2, the steel pipe shape of a sample 2 after steel pipe forming (the maximum outer diameter Dmax (mm) of the steel pipe, the minimum outer diameter Dmin (mm) of the steel pipe, the average outer diameter Dave (mm) of the steel pipe, the average wall thickness t (mm) of the steel pipe, and the roundness (ovality) fO (%) of the outer circumferential shape of the steel pipe), steel pipe strength characteristics after steel pipe forming (the Young's modulus E (GPa) of the steel pipe, the Poisson's ratio µ (-) of the steel pipe, the tensile strength YS (MPa) of the steel pipe, the compressive strength 0.23% YS (stress at a strain of 0.23%) of the steel pipe, and the compressive strength 0.5% YS (stress at a strain of 0.5%) of the steel pipe), the pipe-making strain during steel pipe forming (the tensile strain (%) during steel pipe forming), coating conditions (the maximum temperature (°C) and the holding time (min)), and the bending strain (%) during construction illustrated in Table 1 were input into the generated steel pipe collapse strength prediction model to predict the collapse strength under external pressure bending after steel pipe forming.

In Example 1, the actual collapse strength under external pressure bending of the sample 1 illustrated in Table 1 was actually determined (actual pipe test result).

In Example 2, the actual collapse strength under external pressure bending of the sample 2 illustrated in Table 1 was actually determined (actual pipe test result).

In Comparative Example 1, the steel pipe shape of the sample 1 after steel pipe forming (the maximum outer diameter Dmax (mm) of the steel pipe, the minimum outer diameter Dmin (mm) of the steel pipe, the average outer diameter Dave (mm) of the steel pipe, the average wall thickness t (mm) of the steel pipe, and the roundness (ovality) fO (%) of the outer circumferential shape of the steel pipe), steel pipe strength characteristics after steel pipe forming (the Young's modulus E (GPa) of the steel pipe, the Poisson's ratio µ (-) of the steel pipe, and the tensile strength YS (MPa) of the steel pipe), and the bending strain (%) during construction illustrated in Table 1 were input into a prediction formula according to NPL 1 to predict the collapse strength during bending of the coated steel pipe after steel pipe forming.

In Comparative Example 2, the steel pipe shape of the sample 2 after steel pipe forming (the maximum outer diameter Dmax (mm) of the steel pipe, the minimum outer diameter Dmin (mm) of the steel pipe, the average outer diameter Dave (mm) of the steel pipe, the average wall thickness t (mm) of the steel pipe, and the roundness (ovality) fO (%) of the outer circumferential shape of the steel pipe), steel pipe strength characteristics after steel pipe forming (the Young's modulus E (GPa) of the steel pipe, the Poisson's ratio µ (-) of the steel pipe, and the tensile strength YS (MPa) of the steel pipe), and the bending strain (%) during construction illustrated in Table 1 were input into a prediction formula according to NPL 1 to predict the collapse strength during bending of the coated steel pipe after steel pipe forming.

In Comparative Example 1, the actual collapse strength under external pressure bending of the sample 1 illustrated in Table 1 was actually determined (actual pipe test result) .

In Comparative Example 2, the actual collapse strength under external pressure bending of the sample 2 illustrated in Table 1 was actually determined (actual pipe test result) .

The criteria of the actual pipe test results in Examples 1 and 2 were the same as in Comparative Examples 1 and 2, and the difference between an actual collapse strength determined in an experiment and a standard value was evaluated. A pipe giving an actual collapse strength lower than the standard value was evaluated as NG; a pipe giving an actual collapse strength higher than the standard value by less than 10% was evaluated as C; a pipe giving an actual collapse strength higher than the standard value by not less than 10% and less than 20% was evaluated as B; and a pipe giving an actual collapse strength higher than the standard value by not less than 20% was evaluated as A.

As a result, in Example 1, the actually determined, coated steel pipe collapse strength under external pressure bending (actual pipe test result) was higher than the standard value (predetermined standard value) by not less than 20%, and the evaluation result was A. The predictive value of the coated steel pipe collapse strength under external pressure bending by using the steel pipe collapse strength prediction model was also higher than the standard value (predetermined standard value) by not less than 20%, and the evaluation result was A. The experimental evaluation matched the predictive result.

In Example 2, the actually determined, coated steel pipe collapse strength under external pressure bending (actual pipe test result) was higher than the standard value (predetermined standard value) by not less than 10% and less than 20%, and the evaluation result was B. The predictive value of the coated steel pipe collapse strength under external pressure bending by using the steel pipe collapse strength prediction model was also higher than the standard value (predetermined standard value) by not less than 10% and less than 20%, and the evaluation result was B. The experimental evaluation matched the predictive result.

In Comparative Example 1, the actually determined, coated steel pipe collapse strength under external pressure bending (actual pipe test result) was higher than the standard value (predetermined standard value) by not less than 20%, and the evaluation result was A. The predictive value of the coated steel pipe collapse strength under external pressure bending by using the prediction formula according to NPL 1 was higher than the standard value (predetermined standard value) by less than 10%, and the evaluation result was C. The experiment evaluation was failed to match the predictive result.

In Comparative Example 2, the actually determined, coated steel pipe collapse strength under external pressure bending (actual pipe test result) was higher than the standard value (predetermined standard value) by not less than 10% and less than 20%, and the evaluation result was B. The predictive value of the coated steel pipe collapse strength under external pressure bending by using the prediction formula according to NPL 1 was higher than the standard value (predetermined standard value) by less than 10%, and the evaluation result was C. The experiment evaluation was failed to match the predictive result.

As described in Examples 1 and 2, in the present invention, the predictive value of the coated steel pipe collapse strength under pressure bending matches the experimental result, and this reveals high prediction accuracy.

### Reference Signs List

1 steel pipe manufacturing characteristics determination apparatus
2 arithmetic unit
3 RAM
4 ROM
5 arithmetic processing unit
6 steel pipe collapse strength prediction model generation section
7 steel pipe manufacturing characteristics arithmetic section
8 input unit
9 storage unit
10 output unit
11 bus
41 steel pipe collapse strength prediction model generation program
42 steel pipe manufacturing characteristics calculation program
61 learning data acquisition section
62 preprocessing section
63 model generation section
64 result storage section
71 information read section
72 collapse strength prediction section
73 steel pipe manufacturing characteristics determination section
74 result output section
101 input layer
102 intermediate layer
103 output layer

## Claims

1. A steel pipe manufacturing method comprising:
determining a coated steel pipe manufacturing condition in accordance with a steel pipe manufacturing characteristic determined by a steel pipe manufacturing characteristics determination; and
manufacturing an anticorrosion-coated steel pipe for use in constructing a submarine pipeline under the determined coated steel pipe manufacturing condition,
wherein said steel pipe manufacturing characteristics determination comprises:
sequentially changing at least one of a steel pipe shape after steel pipe forming, a steel pipe strength characteristic after steel pipe forming, a pipe-making strain during steel pipe forming, a coating condition, and a bending strain during construction included in a steel pipe manufacturing characteristic such that a predicted coated steel pipe collapse strength under external pressure bending by a steel pipe collapse strength prediction asymptotically approaches a requested collapse strength under external pressure bending of an intended coated steel pipe, to determine a steel pipe manufacturing characteristic,
wherein said steel pipe collapse strength prediction comprises:
inputting, into a generated steel pipe collapse strength prediction model a steel pipe manufacturing characteristic including a steel pipe shape of a coated steel pipe to be predicted after steel pipe forming, a steel pipe strength characteristic after steel pipe forming, a pipe-making strain during steel pipe forming, a coating condition, and a bending strain during construction, to predict a collapse strength under external pressure bending of a coated steel pipe coated after steel pipe forming,
and wherein generating said steel pipe collapse strength prediction model comprises:
performing machine learning of a plurality of learning data that include, as an input datum, a previous steel pipe manufacturing characteristic including a steel pipe shape after steel pipe forming, a steel pipe strength characteristic after steel pipe forming, a pipe-making strain during steel pipe forming, a coating condition, and a bending strain during construction and, as an output datum, a previous collapse strength under external pressure bending of a coated steel pipe coated after steel pipe forming, to generate a steel pipe collapse strength prediction model that predicts a collapse strength under external pressure bending of a coated steel pipe coated after steel pipe forming.

2. The steel pipe manufacturing method according to claim 1, wherein a method of the machine learning is a neural network, and the steel pipe collapse strength prediction model is a prediction model constructed by the neural network.

## Patentansprüche

1. Stahlrohrherstellungsverfahren, das Folgendes umfasst:
Bestimmen einer Herstellungsbedingung für ein beschichtetes Stahlrohr in Übereinstimmung mit einer Stahlrohrherstellungscharakteristik, die durch eine Stahlrohrherstellungscharakteristikenbestimmung bestimmt wird; und
Herstellen eines antikorrosionsbeschichteten Stahlrohrs zur Verwendung beim Konstruieren einer Unterwasserpipeline unter der bestimmten Herstellungsbedingung für das beschichtete Stahlrohr, wobei die Stahlrohrherstellungscharakteristikenbestimmung Folgendes umfasst:
sequentielles Ändern mindestens eines von einer Stahlrohrform nach dem Stahlrohrbilden, einer Stahlrohrfestigkeitscharakteristik nach dem Stahlrohrbilden, einer Rohrherstellungsbelastung während des Stahlrohrbildens, einer Beschichtungsbedingung und einer Biegebelastung während der Konstruktion, die in einer Stahlrohrherstellungscharakteristik eingeschlossen sind, sodass sich eine vorhergesagte Einbruchsfestigkeit des beschichteten Stahlrohrs unter äußerer Druckbiegung durch eine Stahlrohreinbruchsfestigkeitsvorhersage asymptotisch an eine geforderte Einbruchsfestigkeit unter äußerer Druckbiegung eines beabsichtigten beschichteten Stahlrohrs annähert, um eine Stahlrohrherstellungscharakteristik zu bestimmen, wobei die Stahlrohreinbruchsfestigkeitsvorhersage Folgendes umfasst:
Eingeben einer Stahlrohrherstellungscharakteristik in ein erzeugtes Stahlrohreinbruchsfestigkeitsvorhersagemodell einschließlich einer Stahlrohrform eines beschichteten Stahlrohrs, die nach dem Stahlrohrbilden vorherzusagen ist, einer Stahlrohrfestigkeitscharakteristik nach der Stahlrohrbildung, einer Rohrherstellungsbelastung während der Stahlrohrbildung, einer Beschichtungsbedingung und eine Biegebelastung während der Konstruktion, um eine Einbruchsfestigkeit unter Biegedruck von außen eines beschichteten Stahlrohrs, das nach der Stahlrohrbildung beschichtet wurde, vorherzusagen, und wobei das Erzeugen des Stahlrohreinbruchsfestigkeitsvorhersagemodells Folgendes umfasst:
Durchführen von maschinellem Lernen einer Vielzahl von Lerndaten, die als Eingabedaten eine frühere Stahlrohrherstellungcharakteristik einschließlich einer Stahlrohrform nach der Stahlrohrbildung, einer Stahlrohrfestigkeitscharakteristik nach der Stahlrohrbildung, einer Rohrherstellungsbelastung während der Stahlrohrbildung, einer Beschichtungsbedingung und einer Biegebelastung während der Konstruktion, und als Ausgabedaten, eine frühere Einbruchsfestigkeit unter Biegedruck von außen eines beschichteten Stahlrohrs, das nach der Stahlrohrbildung beschichtet wurde, einschließen, um ein Stahlrohreinbruchsfestigkeitsvorhersagemodell zu erzeugen, das eine Einbruchsfestigkeit unter Biegedruck von außen eines beschichteten Stahlrohrs, das nach der Stahlrohrbildung beschichtet wurde, vorhersagt.

2. Stahlrohrherstellungsverfahren nach Anspruch 1, wobei ein Verfahren des maschinellen Lernens ein neuronales Netzwerk ist und das Stahlrohreinbruchsfestigkeitsvorhersagemodell ein durch das neuronale Netzwerk konstruiertes Vorhersagemodell ist.

## Revendications

1. Procédé de fabrication de tuyau en acier comprenant :
déterminer une condition de fabrication de tuyau en acier revêtu conformément à une caractéristique de fabrication de tuyau en acier déterminée par une détermination de caractéristiques de fabrication de tuyau en acier ; et
fabriquer un tuyau en acier revêtu d'une anticorrosion et destiné à une utilisation dans la construction d'un pipeline sous-marin dans la condition de fabrication de tuyau en acier revêtu déterminée, dans lequel ladite détermination de caractéristiques de fabrication de tuyau en acier comprend :
changer de manière séquentielle au moins un élément parmi une forme de tuyau en acier après la formation du tuyau en acier, une caractéristique de résistance de tuyau en acier après la formation du tuyau en acier, une contrainte de réalisation de tuyau pendant la formation du tuyau en acier, une condition de revêtement, et une contrainte de flexion pendant la construction incluse dans une caractéristique de fabrication de tuyau en acier de telle sorte qu'une résistance à l'écrasement de tuyau en acier revêtu prédite sous la flexion d'une pression externe par une prédiction de résistance à l'écrasement de tuyau en acier s'approche de manière asymptomatique d'une résistance à l'écrasement requise sous la flexion d'une pression externe d'un tuyau en acier revêtu attendu, afin de déterminer une caractéristique de fabrication de tuyau en acier, dans lequel ladite prédiction de résistance à l'écrasement de tuyau en acier comprend :
entrer, dans un modèle de prédiction de résistance à l'écrasement de tuyau en acier, une caractéristique de fabrication de tuyau en acier incluant une forme de tuyau en acier d'un tuyau en acier revêtu à prédire après la formation du tuyau en acier, une caractéristique de résistance de tuyau en acier après la formation du tuyau en acier, une contrainte de réalisation de tuyau pendant la formation du tuyau en acier, une condition de revêtement, et une contrainte de flexion pendant la construction, pour prédire une résistance à l'écrasement sous la flexion d'une pression externe d'un tuyau en acier revêtu qui est revêtu après la formation du tuyau en acier,
et dans lequel la génération dudit modèle de prédiction de résistance à l'écrasement de tuyau en acier comprend :
mettre en oeuvre un apprentissage automatique d'une pluralité de données d'apprentissage qui incluent, comme donnée d'entrée, une caractéristique de fabrication de tuyau en acier précédente incluant une forme de tuyau en acier après la formation du tuyau en acier, une caractéristique de résistance de tuyau en acier après la formation du tuyau en acier, une contrainte de réalisation de tuyau pendant la formation du tuyau en acier, une condition de revêtement, et une contrainte de flexion pendant la construction et, comme donnée de sortie, une résistance à l'écrasement précédente sous une flexion de pression externe d'un tuyau en acier revêtu qui a été revêtu après la formation du tuyau en acier, afin de générer un modèle de prédiction de résistance à l'écrasement de tuyau en acier qui prédit une résistance à l'écrasement sous une flexion de pression externe d'un tuyau en acier revêtu qui a été revêtu après la formation du tuyau en acier.

2. Procédé de fabrication de tuyau en acier selon la revendication 1, dans lequel un procédé d'apprentissage automatique est un réseau de neurones, et le modèle de prédiction de résistance à l'écrasement de tuyau en acier est un modèle de prédiction construit par le réseau de neurones.
